# EUROPEAN PATENT APPLICATION

(11) **EP 2 334 126 A1**
(43) Date of publication of application: **15.06.2011**
(21) Application number: 09306223.0
(22) Date of filing: 14.12.2009
(51) Int. Cl.: H04W 60/00, H04L 29/06, H04N 7/26

(54) **delivery of a packet data stream in a multi access mobile communication system**

(71) Applicant: Alcatel Lucent, 75008 Paris (FR)
(72) Inventor: Melia, Telemaco, 91620, NOZAY (FR); El Mghazli, Yacine, 91620, NOZAY (FR)
(74) Representative: El Manouni, Josiane

(57) **Abstract**

One object of the present invention is a method for the delivery of a packet data stream to a multi mode terminal in a multi access mobile communication system, said packet data stream comprising packets of different types such that said delivery includes selectively dropping packets according to their type as a function of available accesses, said system supporting IP mobility and registration of multiple routing addresses, said method comprising the steps of:
- associating types of packets with routing addresses,
- dropping a received packet of a type associated with a routing address not corresponding to an available access.

## Description

The present invention generally relates to mobile communication networks and systems.

Detailed descriptions of mobile communication networks and systems can be found in the litterature, such as Technical Specifications published by standardisation bodies such as for example 3GPP (3^{rd} Generation Partnership Project).

The present invention generally relates to the delivery of a packet data stream to a multi mode terminal in a multi access mobile communication system.

An example of a packet data stream which will be more particularly considered in the following, corresponds to SVC (Scalable Video Coding) based video stream. In SVC, packets of different types include packets of different quality layers such as QCIF (Quarter Common Intermediate Format), CIF (Common intermediate Format), SD (Standard Definition), HD (High Definition).

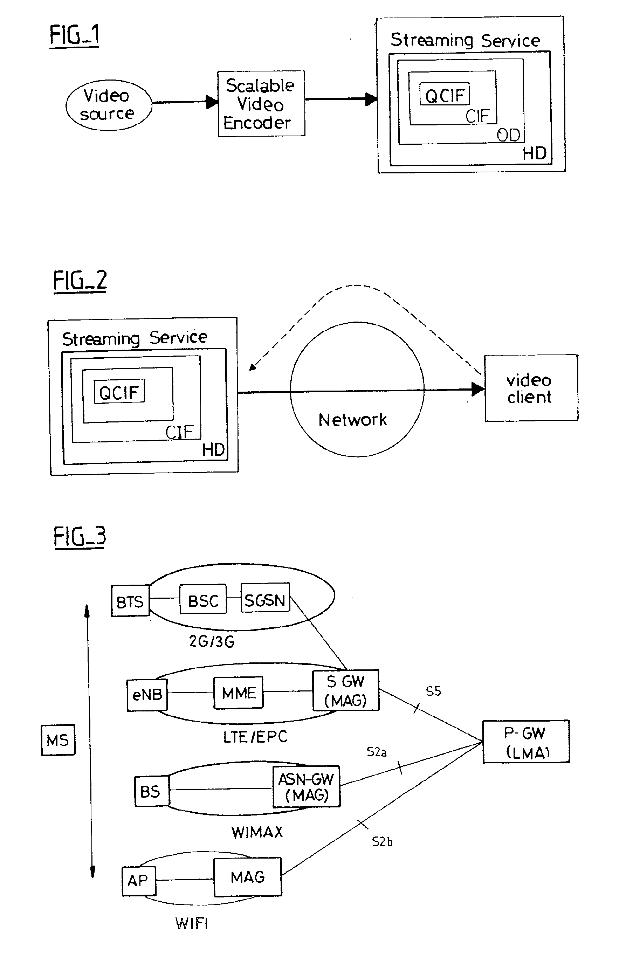

As illustrated in figure 1, in SVC based technology, a video stream delivered by a Video Source is encoded by a Scalable Video Encoder. The video stream is encoded only once by embedding several quality layers, such as QCIF, CIF, SD, HD, enabling applications to perceive different video quality levels.

As illustrated in figure 2, generally a protocol is run between Client and Server to negotiate the video quality delivery (e.g. video streaming protocol RTSP can support such feature). Figure 2 illustrates the Client Server exchange. The client application sends messages to the streaming service to adjust the bit rate, and the server adjusts the bit rate accordingly. In other words, the streaming server selects one of these different quality layers, for delivery to a Video Client in a user terminal.

As recognized by the inventors, there is a need to improve the delivery of packet data streams (such as in particular SVC video streams) in mobile communication systems, particularly in the context of multi- access networks and multi-mode mobile terminals, where each mobile terminal would need to contact the Video Server and negotiate the video rate based on the current access technology, each time the access network changes, if a solution as illustrated in figure 2 were to be used.

If we consider multi-radio or multi-mode devices (integrating for instance WiMAX, WiFi, 3G and/or DVB) it would be useful to be able to deliver the video stream to the most appropriate access technology. Additionally, in the context of highly mobile devices, where radio conditions and network load heavily depend on user mobility (and are mostly unpredictable), it would be useful to have a solution that can adapt fast enough to changing conditions. Further, it would be useful to have a solution wherein the client application would be free from any user interaction.

In a solution as illustrated in figure 2, the mobile device should contact the video server each time it changes its point of attachment to the network (e.g. due to mobility). If it is possibly feasible for networks with large cell coverage it might become unfeasible for networks with small coverage and higher data rates. Such networks are obviously more suitable for video delivery. In addition, this assumes that the server adapts the video stream to each client: this may limit the number of clients being served. There is a need for developing a more dynamic video delivery negotiation procedure allowing end mobile user to enjoy better services.

The present invention in particular addresses such needs. More generally, the present invention enables to improve delivery of packet data streams in such systems.

These and other objects are achieved, in one aspect, in an embodiment, by a method for the delivery of a packet data stream to a multi mode terminal in a multi access mobile communication system, said packet data stream comprising packets of different types such that said delivery includes selectively dropping packets according to their type as a function of available accesses, said system supporting IP mobility and registration of multiple routing addresses, said method comprising the steps of:
- associating types of packets with routing addresses,
- dropping a received packet of a type associated with a routing address not corresponding to an available access.

These and other objects are achieved, in other aspects, by entities for performing such method, such as in particular terminal or User Equipment UE, and network entities, including network entity involved in packet routing, network entity involved in IP mobility management, network entity involved in policy control. Such network entities may include Packet Data Network Gateway PDN-GW and/or Local Mobility Anchor LMA.

These and other objects will become more apparent from the following description taken in conjunction with the accompanying drawings:
- figure 1 illustrates SVC based technology,
- figure 2 illustrates Client Server based interaction for SVC video stream delivery,
- figure 3 illustrates an example of a multi access system,
- figures 4, 5, 6 illustrate different examples for SVC video stream delivery, corresponding to different examples of available accesses,
- figures 7, 8, 9 illustrate different examples of association between quality layers and routing addresses, corresponding to the different examples illustrated in figures 4, 5, 6,
- figure 10 illustrates an example of entities involved in SVC video stream delivery.

The present invention generally relates to the delivery of a packet data stream to a multi mode terminal in a multi access mobile communication system.

An example of a packet data stream, which will be more particularly considered in the following, corresponds to a SVC (Scalable Video Coding) based video stream, whereby packets of different types include packets of different quality layers, including QCIF (Quarter Common Intermediate Format), CIF (Common intermediate Format), SD (Standard Definition), HD (High Definition).

An example of a multi access system is illustrated in figure 3. In this example, a Mobile Station MS has access to a Core Network such as 3GPP Evolved Packet Core EPC via different accesses including 3GPP accesses such as 2G/3G and 3G LTE accesses, and non 3GPP accesses such as WiMAX and WiFi accesses. A descrption of such system can be found for example in 3GPP TS 23.401 and 3GPP TS 23.402.

In an embodiment, the multi access system supports IP mobility and registration of multiple routing addresses (also called multi-homing).

Examples of IP mobility protocols include Mobile lPv6 [as specified in particular in RFC 3775] or PMIPv6 Proxy Mobile IPv6 [as specified in particular in RFC 5213). PMIPv6 is used in particular in the context of multi access systems such as illustrated in figure 3. As illustrated in figure 3, networks entities involved in IP mobility include Mobile Access Gateway MAG (located in Serving Gateway S-GW of EPC for 3GPP accesses, or in a non 3GPP access network entity such as ASN-GW of WiMAX for non 3GPP accesses) and Local Mobility Anchor LMA (located in PDN Gateway PDN-GW of EPC).

Multi-homing is the ability of a mobile network and a mobile device to agree, upon signaling exchange, the interface where data flows have to be routed to. Multi-homing implementation depends on the underlying IP mobility protocol.

A description of multi-homing can be found for example in IETF Internet-Draft, draft-ieif-monami6-multiplecoa-11.txt, "Multiple Care-of Addresses Registration", and IETF Internet-Draft, draft-ietf-mext-flow-binding-01.txt, "Flow Bindings in Mobile IPvb and Nemo Basic Support".

In an embodiment, a packet data stream comprises packets of different types such that said delivery includes selectively dropping packets according to their type, as a function of available accesses.

In an embodiment, selectively dropping packets according to their type as a function of available accesses comprises the steps of:
- associating types of packets with routing addresses,
- dropping a received packet of a type associated with a routing address not corresponding to an available access.

In an embodiment, delivery of a packet data stream may also comprise a step of:
- routing a received packet of a type associated with a routing address corresponding to an available access, towards said routing address.

The association of a type of packet with a routing address may be considered as a routing rule, and the type of packet may be considered as a routing filter. Appropriate routing rules may be configured in the network. In the considered example, the routing filters are specific to the scalable video coding technology and allow the network to redirect the flows towards the most appropriate interface. The UE E is then able to receive data simultaneously via different interfaces, according to the configured routing rules.

In an embodiment, the different video quality layers (SVC-encoded) are spread over the different wireless accesses, according to their inherent capacity.

In an embodiment, filtering criteria are added in a Local Mobility Anchor based on the scalable video encoding thus selecting the most appropriate delivery access network to the mobile device.

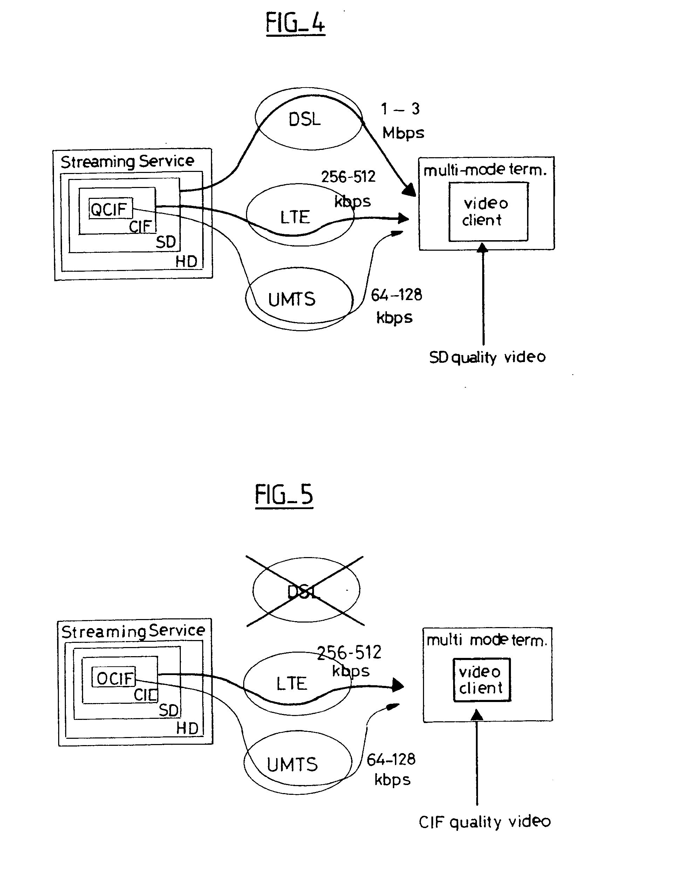

Figures 4, 5, 6 illustrate different examples of delivery of an SVC video stream, corresponding to different examples of available accesses, in a multi access system comprising DSL, LTE and UMTS accesses for example.
Figure 4 illustrates a first example whereby DSL, LTE and UMTS accesses are available and the mobile device can receive via three different channels. In particular, at the time illustrated in figure 4, the video stream can be sent with SD quality via the DSL link.

In a second example, if the DSL link becomes not available, then video is routed via LTE and quality is CF only, as illustrated in figure 5.

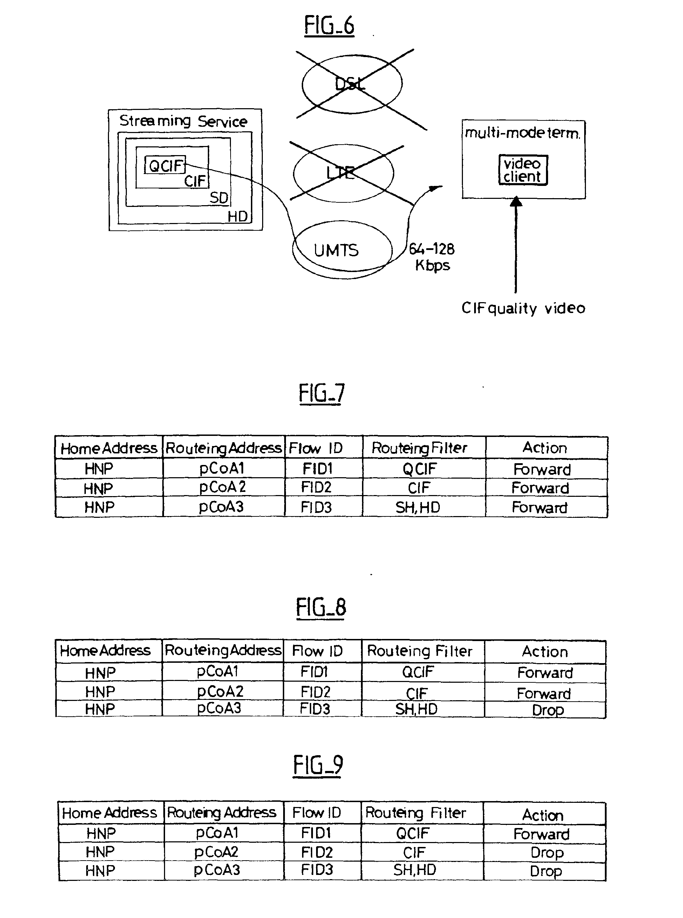

Finally, in a third example, if even LTE becomes not available, then video is transferred with QCIF quality via the UMTS channel, as illustrated in figure 6.

Figures 7, 8, 9 illustrate different examples of data that may be stored in a binding cahe in a Core Network entity involved in IP mobility, such as LMA, corresponding to the different examples illustrated in figures 4, 5, 6.

In the example illustrated in figures 7, 8, 9, the binding cache data stored in the LMA include:
- Home Network Prefix HNP
- Routing Address
- Flow ID
- Routing Filter
- Action.

In the example of figures 7, 8, 9:
- Routing Filter QCIF is associated with routing address pCoA1, enabling routing of QCIP packets towards UMTS,
- Routing Filter CIF is associated with routing address pCoA2, enabling routing of CIP packets towards LTE,
- Routing Filter SH, HD is associated with routing address pCoA3, enabling routing of SH, HD packets towards DSL.

In the example of figure 7:
- data noted "Action" is set to "Forward" for each quality layer and associated routing address, indicating that no packet should be dropped.

In the example of figure 8:
- data noted "Action" is set to "Drop" for quality layers SH, HD and associated routing address pCoA3, indicating that packet of SH, HD quality layers should be dropped.

In the example of figure 9:
- data noted "Action" is set to "Drop" for quality layers CIF and SH, HD and associated routing address pCoA2 and pCoA3, indicating that packet of SH, HD and CIP quality layers should be dropped.

Packets may be marked with the corresponding quality layer. Routing a received packet towards a routing addresses associated with a given quality layer may then be performed by recovering (thanks to said marking or thanks to packet inspection) the quality layer of the received packet, and routing the packet towards the routing address associated with the thus recovered quality layer, according to the association as configured in the network.

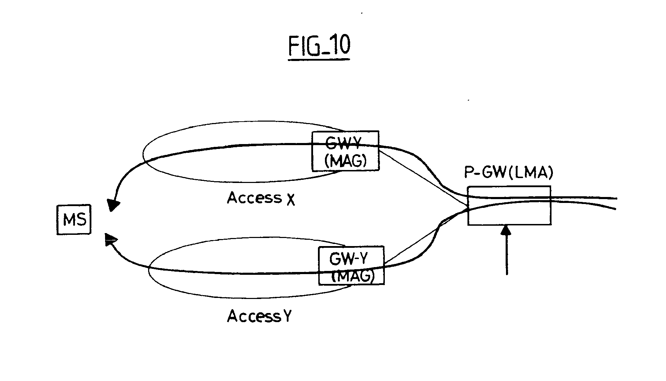

Figure 10 shows a streaming service sending data to a mobile node connected to the EPC network. Data is routed according to the EPC architecture by the LMA functionality located at the PDN-GW to the MAG located at the S-GW. Flows can first be checked at the LMA, through deep packet inspection, and the flows can be routed to different S-GWs depending on UE capabilities.

The decision of splitting flow is transparent to the UE, still the UE reassembles the received streams.

Scalable codec flows can be mapped to a specific wireless access in a network controlled fashion giving to the mobile operator the possibility to optimize traffic delivery based on the mobile device capabilities. This capability is anchored at the Local Mobility Anchor.

In one aspect, the present invention provides a method for the delivery of packet data streams, examples of which have been described above.

In an embodiment, there is provided a method for the delivery of a packet data stream to a multi mode terminal in a multi access mobile communication system, said packet data stream comprising packets of different types such that said delivery includes selectively dropping packets according to their type as a function of available accesses, said system supporting IP mobility and registration of multiple routing addresses, said method comprising the steps of:
- associating types of packets with routing addresses,
- dropping a received packet of a type associated with a routing address not corresponding to an available access.

In an embodiment, there is provided a method comprising a step of:
- routing a received packet of a type associated with a routing address corresponding to an available access, towards said routing address.

In an embodiment, there is provided a method comprising a step of:
- creating an association between types of packets and routing addresses, using User Equuipment's capabilities and/or user's preferences and/or operator's policies.

In an embodiment, there is provided a method comprising a step of:
- a User Equipment and a network entity exchanging signalling for the creation of said association between types of packets and routing addresses.

In an embodiment, there is provided a method comprising a step of:
- network entities exchanging signalling for the creation of said association between types of packets and routing addresses.

In an embodiment, said signalling includes IP mobility signalling.

In an embodiment, there is provided a method comprising a step of:
- configuring a network entity involved in packet routing, with said association between types of packets and routing addresses.

In an embodiment, there is provided a method comprising a step of:
- providing information as to available accesses, to a network entity involved in packet routing, via IP mobility signalling.

In addition to a method for delivery of packet data stream (examples of which have been decribed above), the present invention also provides different entities comprising means for performing such method, such as in particular terminal or User Equipment UE, and network entities, including network entity involved in packet routing, network entity involved in IP mobility management, network entity involved in policy control. Such network entities may include Packet Data Network Gateway PDN-GW and/or Local Mobility Anchor LMA.

In an embodiment, there is provided a multi mode terminal or User Equipment comprising, for the delivery of a packet data stream to said multi mode terminal in a multi access mobile communication system, said packet data stream comprising packets of different types such that said delivery includes selectively dropping packets according to their type as a function of available accesses, said system supporting IP mobility and registration of multiple routing addresses:
- means for exchanging signalling with the network (such as in particular with a network entity involved in IP mobility management, such as in particular MAG) for the creation of said association between types of packets and routing addresses.

In an embodiment, there is provided a network entity involved in policy control, comprising, for the delivery of a packet data stream to a multi mode terminal in a multi access mobile communication system, said packet data stream comprising packets of different types such that said delivery includes selectively dropping packets according to their type as a function of available accesses, said system supporting IP mobility and registration of multiple routing addresses:
- means for exchanging signalling with another network entity (such as in particular with a network entity involved in IP mobility management, such as in particular LMA) for the creation of said association between types of packets and routing addresses.

In an embodiment, there is provided a network entity, such as in particular a network entity involved in IP mobility management (such as MAG or LMA), comprising, for the delivery of a packet data stream to a multi mode terminal in a multi access mobile communication system, said packet data stream comprising packets of different types such that said delivery includes selectively dropping packets according to their type as a function of available accesses, said system supporting IP mobility and registration of multiple routing addresses:
- means for exchanging signalling with another network entity, such as in particular another network entity involved in IP mobility management (such as LMA or MAG), for the creation of said association between types of packets and routing addresses.

In an embodiment, there is provided a network entity, such as in particular a network entity involved in packet routing (such as PDN-GW and/or LMA), comprising, for the delivery of a packet data stream to a multi mode terminal in a multi access mobile communication system, said packet data stream comprising packets of different types such that said delivery includes selectively dropping packets according to their type as a function of available accesses, said system supporting IP mobility and registration of multiple routing addresses:
- means for storing an association between types of packets and routing addresses.

In an embodiment, there is provided a network entity, such as in particular a network entity involved in packet routing (such as PDN-GW and/or LMA), comprising, for the delivery of a packet data stream to a multi mode terminal in a multi access mobile communication system, said packet data stream comprising packets of different types such that said delivery includes selectively dropping packets according to their type as a function of available accesses, said system supporting IP mobility and registration of multiple routing addresses:
- means for dropping a received packet of a type associated with a routing address not corresponding to an available access.

In an embodiment, there is provided a network entity, such as in particular a network entity involved in packet routing (such as PDN-GW and/or LMA), comprising, for the delivery of a packet data stream to a multi mode terminal in a multi access mobile communication system, said packet data stream comprising packets of different types such that said delivery includes selectively dropping packets according to their type as a function of available accesses, said system supporting IP mobility and registration of multiple routing addresses:
- means for routing a received packet of a type associated with a routing address corresponding to an available access, towards said routing address.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for the delivery of a packet data stream to a multi mode terminal in a multi access mobile communication system, said packet data stream comprising packets of different types such that said delivery includes selectively dropping packets according to their type as a function of available accesses, said system supporting IP mobility and registration of multiple routing addresses, said method comprising the steps of:
- associating types of packets with routing addresses,
- dropping a received packet of a type associated with a routing address not corresponding to an available access.

2. A method according to claim 1, comprising a step of:
- routing a received packet of a type associated with a routing address corresponding to an available access, towards said routing address.

3. A method according to claim 1 or 2, comprising a step of:
- creating an association between types of packets and routing addresses, using terminal's or User Equuipment's capabilities and/or user's preferences and/or operator's policies.

4. A method according to any of claims 1 to 3, comprising a step of:
- a terminal or User Equipment and a network entity exchanging signalling for the creation of said association between types of packets and routing addresses.

5. A method according to any of claims 1 to 4, comprising a step of:
- network entities exchanging signalling for the creation of said association between types of packets and routing addresses.

6. A method according to claim 5, wherein said signalling includes IP mobility signalling.

7. A method according to any of claims 1 to 6, comprising a step of:
- configuring a network entity involved in packet routing, with said association between types of packets and routing addresses.

8. A method according to any of claims 1 to 7, comprising a step of:
- providing information as to available accesses, to a network entity involved in packet routing, via IP mobility signalling.

9. A network entity, comprising means for performing a method according to any of claims 1 to 8.

10. A terminal or User Equipment, comprising means for performing a method according to any of claims 1 to 8.
